# EUROPEAN PATENT SPECIFICATION

(11) **EP 4 531 550 B1**
(45) Date of publication and mention of the grant of the patent: **08.07.2026**
(21) Application number: 23730012.4
(22) Date of filing: 26.05.2023
(51) Int. Cl.: A01K 29/00, A01K 61/80

(54) **PROCESS AND DEVICE FOR DELIVERING QUANTITY-ADJUSTED FEED TO AN AQUACULTURE SYSTEM**
VERFAHREN UND VORRICHTUNG ZUR ABGABE EINER MENGENREGULIERTEN ZUFÜHRUNG AN EIN AQUAKULTURSYSTEM
PROCÉDÉ ET DISPOSITIF DE DISTRIBUTION D'ALIMENTS DONT LA QUANTITÉ EST AJUSTÉE À UN SYSTÈME D'AQUACULTURE

(30) Priority: 01.06.2022 EP 22176812
(43) Date of publication of application: 09.04.2025
(73) Proprietor: Blue Planet Ecosystems GmbH, 2700 Wiener Neustadt (AT)
(72) Inventor: SCHMITZBERGER, Paul, 2700 Wiener Neustadt (AT); SCHMITZBERGER, Georg, 2700 Wiener Neustadt (AT); DETERRE, Cécile, 2700 Wiener Neustadt (AT)
(74) Representative: Margotti, Herwig Franz
(86) International application number: PCT/EP2023/064176
(87) International publication number: WO 2023/232675

(56) References cited:
- EP-A1- 3 779 849
- WO-A1-2021/249986
- CN-A- 114 089 663
- US-A1- 2013 206 078

## Description

The present invention relates to a process for delivering quantity-adjusted feed to fish in an aquaculture system.

The present invention further relates to a device for delivering quantity-adjusted feed to fish in an aquaculture system, an aquaculture system equipped with such a device, a computer program product, comprising instructions causing the feeding device according to any one of claims 10 to 13 carrying out the process for delivering quantity-adjusted feed to fish, a computer readable storage medium on which the computer program is stored, and a data carrier signal transmitting the computer program of the computer program product.

There are many types of pellet feeding machines on the market that are used in recirculating aquaculture systems, aquariums and other commercial feeding operations such as poultry rearing. Most of these use mechanical or electronic dosing systems that are triggered based on
- timers
- manual inputs
- feeding programs

In these cases, feeding quantities and intervals are determined by pre-set values that are disconnected from the current biological and chemical state of the system. This is by far not the best solution and can lead in the best case to non-optimal feeding quantities and in the worst case to serious consequences for animal health.

The feeding operations for fish in aquaculture systems is one of the most critical processes. As the metabolic requirements for oxygen increases significantly after a feeding has occurred, dissolved oxygen levels in fish tanks, ponds and aquariums can fall significantly. In combination with other water quality parameters such as pH, temperature, or ammonium, such a drop in oxygen induced by feeding operations can result in i.) poor fish growth, ii.) feed wastage iii.) fish death. Besides the negative impact on animal health, fish feed is one of the main cost drivers. A poor management of the ideal feeding quantities leads to high operational costs and potential bankruptcy of fish farmers. Current feeding systems do not take these factors into account or use physical sensors that make feeding systems prohibitively expensive or complicated to operate (reliable dissolved oxygen probes designed for continuous operations cost more than EUR 1,000).

There is currently no way to reliably trigger a feeding sequence based on quantifiable biological behavior of the animal/group of animals.

Compared to alternate forms of animal husbandry (rearing of pork, poultry, cattle for dairy/meat), growing fish in land-based Recirculating Aquaculture Systems (RAS) is considered to be significantly more challenging. Fish farming and recirculating aquaculture in particular are generally more critically dependent upon expert management and precise activity than are other forms of farming. Thus, it is unlikely that a farmer with "average" management skills would be successful in RAS fish farming.

The lack of control in current feeding systems causes mismanagement in fish farming operations which can lead to unnecessary pain, disease and suffering for fish. Feeding in particular is the most critical aspect of farm management, since it conditions the productivity of the farm but also the water quality and proper functioning of the system. Quantities of food that are not appropriate for the fish species, the system itself and the current conditions can cause severe issues.

CN114089663A discloses a process for delivering quantity-adjusted feed to fish in an aquaculture system. Although this document mentions "fish farming" it is nevertheless addressed to amateurs and private persons who raise fish at home in bathtubs. CN114089663A addresses the problem that with the improvement of living standards, more and more people start to raise fish at home. The more troublesome thing is that they need to feed the fish regularly, and many fish farmers cannot do it on time due to the relationship between work and life, resulting in that the survival rate of the raised fish is not high. To solve this problem CN114089663A provides a feeding control system based on collecting water quality data, including pH value. Based on the measured PH value the feeding control system analyzes whether the water has ideal water quality or whether the pH value is abnormal. Only when the water quality is ideal fish feeding is carried out, otherwise feeding is suspended. The concept of this solution is based on the consideration that the pH value of the water in the fish tank is affected by the food entered into the fish tank, since the speed of feeding is not completely equal to the speed of fish eating. If there is any abnormality, it means that the feeding has caused a negative impact on the water quality in the fish tank. Such a concept, however, only makes sense for people who raise fish in small or unusual fish tanks, e.g. bathtubs, where the water volume is so small that introduced fish food already leads to a deterioration of the pH value.

Therefore, improved processes and devices for delivering quantity-adjusted feed to fish in an aquaculture system are needed that address at least some of the above-mentioned drawbacks of existing systems. Particularly, processes and devices for delivering quantity-adjusted feed to fish in an aquaculture system are needed that are reliable, easy to manage and preferably automatically operated, cost effective, and have positive results on the health of animals in the aquaculture system.

The present invention solves these problems by providing a process for delivering quantity-adjusted feed to fish in an aquaculture system, comprising the steps of:
capturing image data of the aquaculture system, wherein the image data are continuously captured digital photos or video sequences,
analyzing the breathing rate of the fish in the aquaculture system and the behavior of the fish before and during the feeding based on the captured image data of the aquaculture system, wherein analyzing the behavior of the fish comprises at least one of counting the number of fish in a feeding region of the aquaculture system, determining the velocity of the fish, and determining a mean distance between all fish,
calculating the quantity of feed to be delivered to the aquaculture system based on the breathing rate of the fish in the aquaculture system and the behavior of the fish before and during the feeding,
and delivering the calculated quantity of feed to the aquaculture system.

Analyzing the breathing rate of the fish in the aquaculture system is done by inspecting the rate of opening and closing the mouth of the fish or inspecting lip movements of the fish. Alternatively, or additionally, analyzing the breathing rate of the fish in the aquaculture system is done by inspecting the gills movements.

The feeding control system of CN114089663A comprises a diagnosis unit configured to detect sick fish in the fish tank. The diagnosis unit creates a health file of a new fish when it is put in. This health file can comprise images taken by a camera, but these images are not intended to analyze the breathing rate before and during the feeding.

While lack of control in current feeding systems causes mismanagement in fish farming operations which can lead to unnecessary pain, disease and suffering for fish, the present invention provides highly reliable management of feeding, which is the most critical aspect of the farm management. The invention guarantees that the quantities of food delivered to the aquaculture system are appropriate for the fish species and the aquaculture system itself. The present invention can alleviate the most drastic effects of farm mismanagement by taking critical decisions based on data and fish behavior, and thus making the most critical operation in animal husbandry, feeding, very reliable.

The calculated quantity of feed can be delivered to the aquaculture system by adjusting a variable feed delivery rate per time unit or by adjusting a variable delivery period or an interval between delivery periods at a constant feed delivery rate. For instance, when a feed delivery system used in the invention comprises a dosing screw that can only be rotated at a constant rotational speed then the time period during which the dosing screw is rotated or the intervals at which the dosing screw is rotated for a fixed time period define the amount of feed delivered in a given time unit, e.g., delivered per day. However, when the rotational speed of the dosing screw is adjustable, the amount of feed delivered to the aquaculture system can be adjusted by adjusting the rotational speed of the dosing screw.

In an embodiment of the invention a basic daily quantity of feed delivered to the aquaculture system is set, which daily amount of feed is a constant amount or, preferably, an amount set to increase with the growth of the fish in the aquaculture system. This basic daily quantity of feed is adjusted in accordance with the calculation of the quantity of feed to be delivered to the aquaculture system based on the breathing rate of the fish in the aquaculture system and the behavior of the fish before and during the feeding.

For instance, an amount of feed fed to fish in the aquaculture system is increased regularly to obtain the best possible growth. In the last few weeks of the growth period, the amount should increase by around 1% per day. It is however very important to adjust this quantity to the state of the system and the behavior of the fish. In the final growth stage, the aquaculture system can be very stressed and some failures could impact the whole production. Since the performance of the aquaculture system relies heavily on the quantity that is fed to the fish, it is a crucial parameter to adjust this quantity in real time. In the exemplary embodiment of the invention, the process that defines the quantity to feed assumes by default that the quantity is increased by a fixed amount from the quantity fed on the previous day. This fixed amount depends on the growth stage of the fish. As mentioned earlier, it can be assumed to be around 1% at the end of the growth period. However, two factors can change this feeding amount. The first factor is the breathing rate of the fish, which is analyzed by computer-implemented visualization. The second factor is the behavior of the fish before and during the feeding. Both factors will be explained in more detail below.

The breathing rate of the fish is assumed to be a good indicator of the water quality. One of the factors determining the water quality is the oxygen dissolved in the aquaculture system, but water quality is, among others, also impacted by ammonia in the water or the pH value of the water. While the following description focuses on the oxygen dissolved in the water of the tank the explanations also hold for other factors determining the water quality of the aquaculture system. It is important to monitor if the available oxygen in the tank is enough to sustain the fish metabolism after feeding. If this is not the case, the feeding quantity should be reduced. If this indicator shows a critical level of oxygen, the feedings should be even suspended and optionally an intervention will be triggered. Thus, a preferred embodiment of the invention suggests that if the breathing rate of the fish in the aquaculture system increases above a first threshold breathing rate the quantity of feed will be reduced, and if the breathing rate of the fish falls below a second threshold breathing rate which is lower than the first threshold feeding will be suspended, wherein preferably the first and second threshold rate are determined separately for all fish species in the aquaculture system.

The first threshold breathing rate is the indicator that there is not enough oxygen available to sustain the fish metabolism after feeding. The second threshold breathing rate is an indicator that a level of available oxygen has dropped below a critical level that requires suspending feeding and optionally triggering an intervention. This triggering can be sending a warning message to an operator or starting an automatic technical intervention, such as blowing oxygen or air into the water, reducing the water temperature, etc.

In a variant of this embodiment of the invention the quantity of feed will be reduced if the breathing rate of the fish in the aquaculture system increases above the first threshold breathing rate for a first time period, and feeding will be suspended if the breathing rate of the fish in the aquaculture system falls below the second threshold breathing rate for a second time period. Considering the first time period and the second time period provides some kind of hysteresis that makes the system less "nervous" in regard to reacting to changing oxygen concentrations in the aquaculture system.

It should be noted that estimating the oxygen in the aquaculture system available for the fish metabolism after feeding by inspecting the breathing rate of the fish implicitly also analyses other water parameters that have an influence on the breathing rate and therefore goes beyond simply measuring the oxygen with oxygen probes. Nevertheless, it makes sense that the measuring results of oxygen sensors or ammonia sensors or pH sensors are used for cross-checking. Therefore, in another embodiment of the invention it is suggested that at least one of the dissolved oxygen in the aquaculture system or the ammonia in the water or the pH value of the water is measured, and the measuring results are used in combination with the analyzed breathing rates for calculating the quantity of feed to be delivered to the aquaculture system. It should be noted that in contrast to the expensive oxygen probes mentioned above a cheap oxygen sensor will be sufficient for carrying out cross-checking.

In another embodiment of the invention the water quality is estimated by using computer vision, wherein preferably the estimated water quality is used in combination with the analyzed breathing rates for calculating the quantity of feed to be delivered to the aquaculture system. Estimating the water quality by using computer vision may comprise analyzing at least one of the visibility of the water and the color of the water, or counting or determining floating particles in the water. Computer vision is based on the captured image data of the aquaculture system.

In summary, according to the invention oxygen availability is estimated based on the breathing frequency of the fish which is measured using computer vision. A normal breathing frequency range can be determined for all fish species. If the concentration of dissolved oxygen in the tank is too low, the breathing frequency will increase significantly. If the oxygen concentration stays too low for an extended period of time, or goes down further, the breathing frequency will actually decrease below the normal range, as the fish try to save their energy. E.g., any deviation from the normal range by more than two standard deviations will thus be used as a trigger to decrease the feeding quantity. If the deviation is more than three standard deviations, the feedings will be suspended and an intervention triggered.

In a preferred embodiment of the invention analyzing the behavior of the fish comprises at least one of counting the number of fish in a feeding region of the aquaculture system, determining the velocity of the fish, and determining a mean distance between all fish, wherein an increase of the number of fish in the feeding region and an increase in velocity of the fish and a decrease of the mean distance between all fish is considered as an indication to increase the quantity of feed to be delivered to the aquaculture system, and vice versa. In a variant of this embodiment at least two of the counting the number of fish in a feeding region of the aquaculture system, the determining the velocity of the fish, and the determining a mean distance between all fish are used as a combined indicator for the quantity of feed to be delivered to the aquaculture system, wherein each of said parameters is monitored individually.

A practical example of said embodiments of the invention, wherein the behavior of the fish during and after the feedings is used as a feeding response indicator comprises counting the number of fish observed in the feeding region, their velocity and a "flocking index". The flocking index is defined as the mean distance between all the animals. It should decrease when fish are all grouped together in events such as feedings. The velocity and the number of fish detected in the feeding region should increase during feedings. A baseline for all these parameters can be determined depending on the system configuration, camera placement and the fish species. The evolution of these parameters is monitored during feedings. If the flocking index increases before the end of the feeding, this means the fish are satiated. The same logic applies to the other parameters. Each parameter is monitored individually, and a global indicator is defined from the velocity, count and flocking index for further analysis and visualization purposes. If two of the individual parameters show that the fish lost interest during the feeding, the quantity is reduced as explained above. If the parameters do not return to the baseline range within a reasonable time, the quantity fed will be increased by more than 1% on the next day.

Because every aquaculture system displays unique characteristics based on external factors such as water quality, the makeup of the microbiome, water source and characteristics, fish species and traits, it is preferred that the process according to the invention is a self-learning process automatically adapting to environment and setup of the aquaculture system based on previously tagged image data of the aquaculture system and/or on previous analyses and classification of the breathing rate of the fish in the aquaculture system and the behavior of the fish before and during the feeding.

More specifically, the training could be based on reinforcement learning with a reward function defined for the particular species and configuration of the camera. The gradual adjustments to the feeding quantities will be derived from the training and used as fixed values in the system.

The process according to the invention is a computer-implemented process. It is carried out in a feeding device for fish in an aquaculture system, comprising at least one digital camera ) for continuously capturing digital photos or video sequences, a feed delivery system, and a computer unit designed to receive image data of the aquaculture system captured by the camera and to control the feed delivery system to deliver quantity-adjusted feed rations, wherein the computer unit is adapted to carry out the steps of the process according to the invention as described above.

In one embodiment of the feeding device the digital camera is an underwater camera, or a camera placed in a translucent water-tight housing or behind a viewing window of a wall of the aquaculture system.

Preferably, the feed delivery system is a pneumatic feed delivery system.

Further, an embodiment of the feeding device comprises at least one sensor for measuring the dissolved oxygen in the aquaculture system, wherein the sensor is configured to transmit the measured oxygen values to the computer unit.

The present invention also comprises an aquaculture system, with a feeding device according to the invention and a tank filled with water for growing fish. In one embodiment of the invention, the aquaculture system is a closed system, in which free gas exchange with the environment is prevented. In an alternative embodiment of the invention, the aquaculture system is an open system with free gas exchange with the environment.

The present invention further comprises a computer program product, comprising instructions causing the feeding device according to the invention carrying out the inventive process. The computer program product may be stored on a computer readable storage medium. A data carrier signal may be provided transmitting the computer program of the computer program product. This data carrier signal may be used for distributing the computer program product and for installing or updating the computer program on computer units of the feeding device according to the invention.

The present invention is further explained by exemplary embodiments, without being limited to them, illustrated by the drawings, wherein
Fig. 1 schematically shows an aquaculture system equipped with a feeding device in accordance with the present invention;
Fig. 2 shows a detail B of Fig. 1 depicting the feed delivery system of the present invention; and
Fig. 3 schematically shows another embodiment of an aquaculture system equipped with a feeding device in accordance with the present invention.

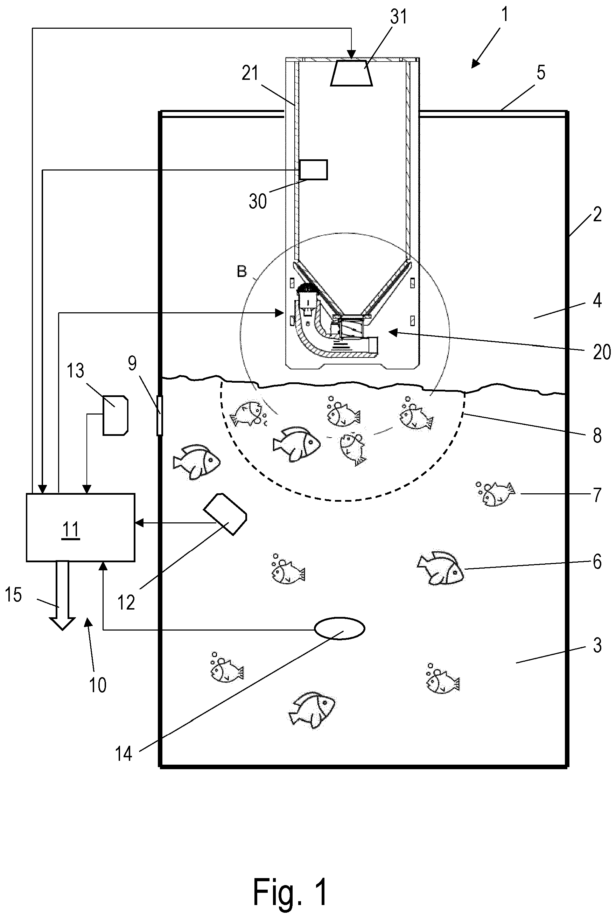

First, reference is made to Fig. 1 which schematically shows an aquaculture system 1 equipped with a feeding device 10 in accordance with the present invention. The aquaculture system 1 comprises a tank 2 partially filled with clean water 3. The aquaculture system 1 can be designed as an open system or as a closed system, in which free gas exchange with the environment is prevented. In the latter case the tank 2 comprises a closure 5 that hermetically seals the air 4 in the tank from gas exchange with the environment. Different species of fish 6, 7 are grown in the tank. The wall of the tank comprises at least one viewing window 9 for inspection of the interior of the tank by operators and/or for placing a camera 13 for continuously capturing digital photos or video sequences.

The core of the invention is a feeding device 10 for feeding the fish 6, 7 in the aquaculture system 1. This feeding device 10 comprises at least one digital camera, such as the mentioned camera 13 placed at the viewing window 9 outside of the tank 2. In this exemplary embodiment of the invention a second digital camera 12 is positioned in the water 3 of the tank 2. This second camera is configured as an underwater camera and its viewing angle is directed at a feeding zone 8. The feeding zone 8 is a region in the water 3 close below its surface where the feed is delivered to by a feed delivery system 20 comprising a feed reservoir 21 and feed conveying means that will be described in detail below. In the drawing, the feeding zone 8 is depicted as a confined area. It should be borne in mind, however, that the feeding zone 8 might be the whole water surface to maximize fish access to the feed. The feeding device 10 further comprises a computer unit 11 designed to receive image data from the interior of the aquaculture system 1 captured by the cameras 12, 13. In this embodiment of the invention an optional oxygen sensor 14 is positioned in the water 3. The oxygen sensor 14 measures the oxygen dissolved in the water and transmits the measured oxygen values to the computer unit 11. The computer unit 10 may be chosen from standard computers available on the market. However, in terms of costs, size, energy consumption and reliability it is preferred to use a single-board computer specifically designed to meet the needs of the invention leaving away all components of standard computers that are not necessary for carrying out the inventive process. The computer unit 10 comprises a central processing unit, a non-volatile program memory, a data memory, interfaces to communicate with the cameras 12, 13, the oxygen sensor 14 and the feed delivery system 20. The computer unit 10 further comprises standard communication interfaces such as USB, LAN, WLAN, Bluetooth and others for data input and output, a keyboard connector, and a display connector. The computer unit 11 is designed to control the feed delivery system 20 to deliver quantity-adjusted feed rations by carrying out the steps of the process that has been explained above. This process runs on the computer unit 11 as a computer program carrying out all steps of the process. The program can be loaded on the computer unit either by connecting a computer readable storage medium on which the computer program is stored, or by receiving a data carrier signal from one of the above-mentioned communication interfaces, the data carrier signal transmitting the computer program of the computer program. The computer unit 11 is also designed to send a trigger signal 15 if the dissolved oxygen in the water 3 of tank 2 falls below a critical level.

Optionally, the feed delivery system 20 can be provided with a temperature/humidity sensor 30 for measuring the temperature and/or humidity in the feed reservoir 21, and a thermoelectric cooling/dehumidifying element 31 for cooling and/or dehumidifying the interior space of the feed reservoir. The thermoelectric cooling/dehumidifying element 31 is controlled by the computer unit 11 in dependency of the measure values received from the temperature/humidity sensor 30. Such an embodiment provides the advantage that the stored feed is kept cool and dry, preventing it from becoming spoiled, because lack of cooling or changing temperatures and excess humidity can cause feed to spoil.

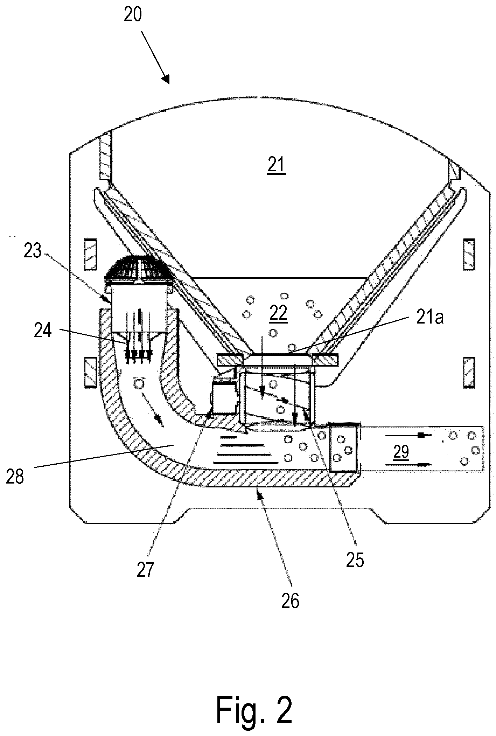

With reference to Fig. 2 a preferred embodiment of the feed delivery system 20 will now be explained. It comprises a feed reservoir 21 containing feed 22, an impeller 23 that generates an airflow 24 through a duct of the housing 26, and a dosing screw 25 positioned under an outlet opening 21a of the feed reservoir 21. The dosing screw 25 is rotated by a motor and gear means 27 and conveys the feed 22 into the duct 28, where it merges with the airflow 21 to a combined feed and air flow 29 that is spread over the feeding zone 8 (see Fig. 1). The computer unit 11 controls the amount of feed 22 delivered by the feed delivery system 20 by adjusting the rotational speed of the impeller 23 and the rotational speed of the dosing screw 25 by controlling the motor and gear means 27, or by adjusting the duration of rotating the impeller 23 and the dosing screw 25.

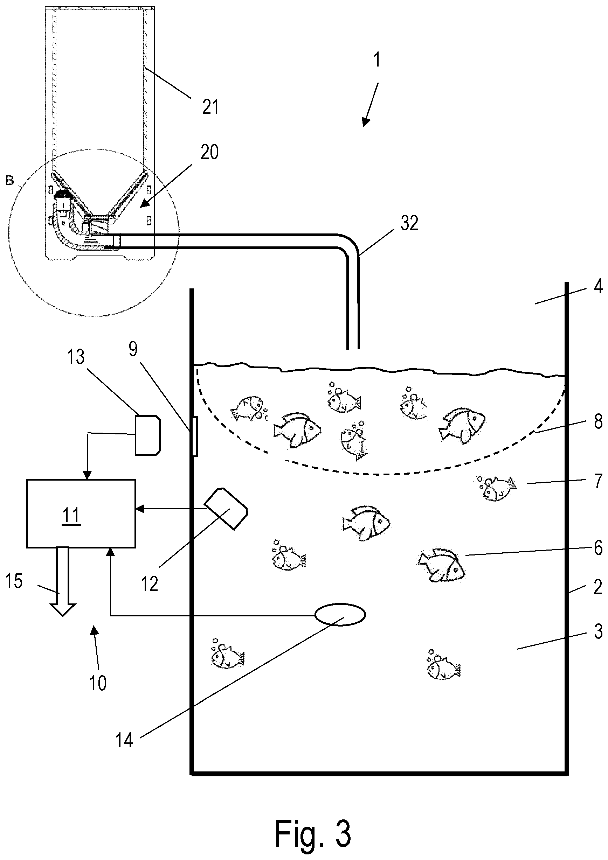

Fig. 3 schematically shows another embodiment of an aquaculture system 1 equipped with a feeding device 10 in accordance with the present invention. This second embodiment of the aquaculture system 1 differs from the first embodiment depicted in Fig. 1 only in that it is configured as an open system with the air 4 in the tank 2 being in direct air exchange with the environment, that the feeding zone 8 covers the entire surface of the water 3, and that the feed delivery system 20 is placed outside of the tank 2. The feed delivery system 20 has a pneumatic pipe 32 connected with one end to the exit of the feed delivery system 20 allowing the feed to be pneumatically transported from the feed reservoir 21 through the pneumatic pipe 32. The open end of the pneumatic pipe 32 reaches into the tank 2, enabling the feed to be poured or blown into the water 3. In order to enable equal distribution of feed across the feeding zone 8, the open end of the pneumatic pipe 32 could be equipped with nozzles or the like. Configuring the pipe 32 as a pneumatic pipe allows to place the feed delivery system 20 relatively far away from the tank 2, for instance up to twenty meters away from the tank. It also allows to position the feed delivery system 20 below the surface level of the water 3.

Like or similar parts, features, and elements of the aquaculture systems of Fig. 1 and Fig. 3 are depicted with the same numerals and have the same or similar functions. Therefore, to avoid repetition it is not necessary to describe the aquaculture system of Fig. 3 in full detail, but it is sufficient to refer to the above description and explanations regarding the aquaculture system of Fig. 1.

## Claims

1. A process for delivering quantity-adjusted feed to fish (6, 7) in an aquaculture system (1), comprising:
capturing image data of the aquaculture system (1), wherein the image data are continuously captured digital photos or video sequences,
analyzing a breathing rate of the fish (6, 7) in the aquaculture system (1) and a behavior of the fish (6, 7) before and during feeding based on the captured image data of the aquaculture system (1), wherein analyzing the behavior of the fish (6, 7) comprises at least one of counting the number of fish (6, 7) in a feeding region (8) of the aquaculture system (1), determining a velocity of the fish (6, 7), and determining a mean distance between all fish (6, 7),
calculating the quantity of feed to be delivered to the aquaculture system (1) based on the breathing rate of the fish (6, 7) in the aquaculture system (1) and the behavior of the fish (6, 7) before and during the feeding, and delivering a calculated quantity of feed to the aquaculture system (1).

2. The process according to claim 1, **characterized in that** the calculated quantity of feed is delivered by adjusting a variable feed delivery rate per time unit or by adjusting a variable delivery period or an interval between delivery periods at a constant feed delivery rate.

3. The process according to claim 1 or 2, **characterized in that** a basic daily quantity of feed delivered to the aquaculture system (1) is set, which daily amount of feed is a constant amount or, preferably, an amount set to increase with the growth of the fish (6, 7) in the aquaculture system (1), wherein this basic daily quantity of feed is adjusted in accordance with the calculation of the quantity of feed to be delivered to the aquaculture system (1) based on the breathing rate of the fish (6, 7) in the aquaculture system (1) and the behavior of the fish (6, 7) before and during the feeding.

4. The process according to any one of the preceding claims, **characterized in that** if the breathing rate of the fish (6, 7) in the aquaculture system (1) increases above a first threshold breathing rate the quantity of feed will be reduced, and if the breathing rate of the fish (6, 7) falls below a second threshold breathing rate which is lower than the first threshold feeding will be suspended, wherein preferably the first and second threshold rate are determined separately for all fish species (6, 7) in the aquaculture system (1).

5. The process according to claim 4, **characterized in that** the quantity of feed will be reduced if the breathing rate of the fish (6, 7) in the aquaculture system (1) increases above the first threshold breathing rate for a first time period, and feeding will be suspended if the breathing rate of the fish (6, 7) in the aquaculture system (1) falls below the second threshold breathing rate for a second time period.

6. The process according to any one of the preceding claims, **characterized in that** at least one of the dissolved oxygen in the aquaculture system (1) or the ammonia in the water (3) or the pH value of the water (3) is measured and the measuring results are used in combination with the analyzed breathing rates for calculating the quantity of feed to be delivered to the aquaculture system (1).

7. The process according to any one of the preceding claims, **characterized in that** the water quality is estimated by using computer vision, wherein preferably the estimated water quality is used in combination with the analyzed breathing rates for calculating the quantity of feed to be delivered to the aquaculture system (1).

8. The process according to any one of the preceding claims, **characterized in that** an increase of the number of fish (6, 7) in the feeding region (8) and an increase in velocity of the fish (6, 7) and a decrease of the mean distance between all fish (6, 7) is considered as an indication to increase the quantity of feed to be delivered to the aquaculture system (1), and vice versa.

9. The process according to claim 8, **characterized in that** at least two of the counting the number of fish in a feeding region of the aquaculture system, the determining the velocity of the fish, and the determining a mean distance between all fish are used as a combined indicator for the quantity of feed to be delivered to the aquaculture system (1), wherein each of said parameters is monitored individually.

10. The process according to any one of the preceding claims, **characterized in that** it is a self-learning process automatically adapting to environment and setup of the aquaculture system (1) based on previously tagged image data of the aquaculture system (1) and/or on previous analyses and classification of the breathing rate of the fish (6, 7) in the aquaculture system (1) and the behavior of the fish (6, 7) before and during the feeding.

11. A feeding device (10) for fish (6, 7) in an aquaculture system (1), comprising at least one digital camera (12, 13) for continuously capturing digital photos or video sequences, a feed delivery system (20), and a computer unit (11) designed to receive image data of the aquaculture system (1) captured by the camera (12, 13) and to control the feed delivery system (20) to deliver quantity-adjusted feed (22) rations, **characterized in that** the computer unit (11) is adapted to carry out the steps of the process according to any one of the preceding claims.

12. The feeding device according to claim 11, **characterized in that** the digital camera (12, 13) is an underwater camera or a camera placed in a translucent water-tight housing or behind a viewing window (9) of a wall of the aquaculture system.

13. The feeding device according to claim 11 or 12, **characterized in that** the feed delivery system (20) is a pneumatic feed delivery system.

14. The feeding device according to any one of claims 11 to 13, **characterized in that** it comprises at least one sensor (14) for measuring the dissolved oxygen in the aquaculture system or the ammonia in the water or the pH value of the water, wherein the sensor (14) is configured to transmit the measured values to the computer unit (11).

15. An aquaculture system (1), comprising a feeding device (10) according to any one of claims 11 to 14, and a tank (2) filled with water (3) for growing fish (6, 7), wherein the aquaculture system (1) is either a closed system, in which free gas exchange with the environment is prevented, or an open system allowing free gas exchange with the environment.

16. A computer program product, comprising instructions causing the feeding device (10) according to any one of claims 11 to 14 to carry out the process according to any one of claims 1 to 10.

17. A computer readable storage medium on which the computer program product according to claim 16 is stored.

18. A data carrier signal carrying the computer program of the computer program product according to claim 16.

## Patentansprüche

1. Verfahren zur Abgabe von mengenangepasstem Futter an Fische (6, 7) in einem Aquakultursystem (1), umfassend:
Erfassen von Bilddaten des Aquakultursystems (1), wobei die Bilddaten kontinuierlich aufgenommene Digitalfotos oder Videosequenzen sind,
Analysieren einer Atemfrequenz der Fische (6, 7) im Aquakultursystem (1) und eines Verhaltens der Fische (6, 7) vor und während der Fütterung auf der Grundlage der erfassten Bilddaten des Aquakultursystems (1), wobei das Analysieren des Verhaltens der Fische (6, 7) mindestens eines von Zählen der Anzahl der Fische (6, 7) in einem Fütterungsbereich (8) des Aquakultursystems (1), Bestimmen einer Geschwindigkeit der Fische (6, 7) und Bestimmen eines mittleren Abstands zwischen allen Fischen (6, 7) umfasst,
Berechnen der an das Aquakultursystem (1) abzugebenden Futtermenge auf der Grundlage der Atemfrequenz der Fische (6, 7) im Aquakultursystem (1) und des Verhaltens der Fische (6, 7) vor und während der Fütterung,
und Zuführen einer berechneten Futtermenge in das Aquakultursystem (1).

2. Verfahren nach Anspruch 1, **dadurch gekennzeichnet, dass** die berechnete Futtermenge durch Einstellen einer variablen Futterzufuhrrate pro Zeiteinheit oder durch Einstellen einer variablen Zufuhrdauer oder eines Intervalls zwischen Zufuhrdauern bei einer konstanten Futterzufuhrrate zugeführt wird.

3. Verfahren nach Anspruch 1 oder 2, **dadurch gekennzeichnet, dass** eine dem Aquakultursystem (1) zugeführte tägliche Grundfuttermenge festgelegt wird, wobei diese tägliche Futtermenge eine konstante Menge oder vorzugsweise eine Menge ist, die so festgelegt ist, dass sie mit dem Wachstum der Fische (6, 7) im Aquakultursystem (1) zunimmt, wobei diese tägliche Grundfuttermenge entsprechend der Berechnung der an das Aquakultursystem (1) abzugebenden Futtermenge angepasst wird, basierend auf der Atemfrequenz der Fische (6, 7) im Aquakultursystem (1) und dem Verhalten der Fische (6, 7) vor und während der Fütterung.

4. Verfahren nach einem der vorstehenden Ansprüche, **dadurch gekennzeichnet, dass**, wenn die Atemfrequenz der Fische (6, 7) im Aquakultursystem (1) über eine erste Schwellenatmungsfrequenz ansteigt, die Futtermenge reduziert wird, und wenn die Atemfrequenz der Fische (6, 7) unter einen zweiten Schwellenwert für die Atemfrequenz fällt, der niedriger ist als der erste Schwellenwert, die Fütterung ausgesetzt wird, wobei vorzugsweise der erste und der zweite Schwellenwert für alle Fischarten (6, 7) im Aquakultursystem (1) separat bestimmt werden.

5. Verfahren nach Anspruch 4, **dadurch gekennzeichnet, dass** die Futtermenge reduziert wird, wenn die Atemfrequenz der Fische (6, 7) im Aquakultursystem (1) während eines ersten Zeitraums über die erste Schwellenwert-Atemfrequenz ansteigt, und dass die Fütterung ausgesetzt wird, wenn die Atemfrequenz der Fische (6, 7) im Aquakultursystem (1) während eines zweiten Zeitraums unter die zweite Schwellenwert-Atemfrequenz fällt.

6. Verfahren nach einem der vorstehenden Ansprüche, **dadurch gekennzeichnet, dass** mindestens einer der folgenden Werte gemessen wird: der Gehalt an gelöstem Sauerstoff im Aquakultursystem (1), der Ammoniakgehalt im Wasser (3) oder der pH-Wert des Wassers (3), und dass die Messergebnisse in Kombination mit den analysierten Atemfrequenzen zur Berechnung der dem Aquakultursystem (1) zuzuführenden Futtermenge verwendet werden.

7. Verfahren nach einem der vorstehenden Ansprüche, **dadurch gekennzeichnet, dass** die Wasserqualität unter Verwendung von Computer Vision geschätzt wird, wobei vorzugsweise die geschätzte Wasserqualität in Kombination mit den analysierten Atmungsraten zur Berechnung der an das Aquakultursystem (1) abzugebenden Futtermenge verwendet wird.

8. Verfahren nach einem der vorstehenden Ansprüche, **dadurch gekennzeichnet, dass** eine Zunahme der Anzahl der Fische (6, 7) im Fütterungsbereich (8) sowie eine Zunahme der Geschwindigkeit der Fische (6, 7) und eine Abnahme des mittleren Abstands zwischen allen Fischen (6, 7) als Hinweis darauf gewertet wird, die dem Aquakultursystem (1) zuzuführende Futtermenge zu erhöhen, und umgekehrt.

9. Verfahren nach Anspruch 8, **dadurch gekennzeichnet, dass** mindestens zwei der Schritte des Zählens der Anzahl der Fische in einem Fütterungsbereich des Aquakultursystems, des Bestimmens der Geschwindigkeit der Fische und des Bestimmens eines mittleren Abstands zwischen allen Fischen als kombinierter Indikator für die dem Aquakultursystem (1) zuzuführende Futtermenge verwendet werden, wobei jeder der genannten Parameter einzeln überwacht wird.

10. Verfahren nach einem der vorstehenden Ansprüche, **dadurch gekennzeichnet, dass** es sich um ein selbstlernendes Verfahren handelt, das sich automatisch an die Umgebung und die Konfiguration des Aquakultursystems (1) anpasst, basierend auf zuvor markierten Bilddaten des Aquakultursystems (1) und/oder auf früheren Analysen und Klassifizierungen der Atemfrequenz der Fische (6, 7) im Aquakultursystem (1) sowie des Verhaltens der Fische (6, 7) vor und während der Fütterung.

11. Eine Fütterungsvorrichtung (10) für Fische (6, 7) in einem Aquakultursystem (1), umfassend mindestens eine Digitalkamera (12, 13) zur kontinuierlichen Aufnahme von Digitalfotos oder Videosequenzen, ein Futterabgabesystem (20), sowie eine Computereinheit (11), die dazu ausgebildet ist, von der Kamera (12, 13) aufgenommene Bilddaten des Aquakultursystems (1) zu empfangen und das Futterabgabesystem (20) so zu steuern, dass mengenangepasste Futterrationen (22) abgegeben werden, **dadurch gekennzeichnet, dass** die Computereinheit (11) dazu ausgebildet ist, die Verfahrensschritte nach einem der vorstehenden Ansprüche auszuführen.

12. Fütterungsvorrichtung nach Anspruch 11, **dadurch gekennzeichnet, dass** die Digitalkamera (12, 13) eine Unterwasserkamera oder eine Kamera ist, die in einem lichtdurchlässigen, wasserdichten Gehäuse oder hinter einem Sichtfenster (9) einer Wand des Aquakultursystems angeordnet ist.

13. Fütterungsvorrichtung nach Anspruch 11 oder 12, **dadurch gekennzeichnet, dass** das Futterzufuhrsystem (20) ein pneumatisches Futterzufuhrsystem ist.

14. Fütterungsvorrichtung nach einem der Ansprüche 11 bis 13, **dadurch gekennzeichnet, dass** sie mindestens einen Sensor (14) zum Messen des gelösten Sauerstoffs im Aquakultursystem oder des Ammoniaks im Wasser oder des pH-Werts des Wassers umfasst, wobei der Sensor (14) so konfiguriert ist, dass er die Messwerte an die Computereinheit (11) überträgt.

15. Aquakultursystem (1), umfassend eine Fütterungsvorrichtung (10) nach einem der Ansprüche 11 bis 14 und ein mit Wasser (3) gefülltes Becken (2) zum Aufzüchten von Fischen (6, 7), wobei das Aquakultursystem (1) entweder ein geschlossenes System ist, in dem ein freier Gasaustausch mit der Umgebung verhindert wird, oder ein offenes System, das einen freien Gasaustausch mit der Umgebung zulässt.

16. Computerprogrammprodukt, umfassend Befehle, die veranlassen, dass die Fütterungsvorrichtung (10) nach einem der Ansprüche 11 bis 14 das Verfahren nach einem der Ansprüche 1 bis 10 ausführt.

17. Computerlesbares Speichermedium, auf dem das Computerprogrammprodukt nach Anspruch 16 gespeichert ist.

18. Datenträgersignal, das das Computerprogramm des Computerprogrammprodukts nach Anspruch 16 überträgt.

## Revendications

1. Procédé de distribution d'alimentation ajustée en quantité à des poissons (6, 7) dans un système d'aquaculture (1), comprenant:
capturer des données d'images du système d'aquaculture (1), les données d'images étant des photos numériques ou des séquences vidéo capturées en continu;
analyser un rythme respiratoire des poissons (6, 7) dans le système d'aquaculture (1) et un comportement des poissons (6, 7) avant et pendant le nourrissage, sur la base des données d'images capturées du système d'aquaculture (1), dans lequel l'analyse du comportement des poissons (6, 7) comprend au moins une des étapes suivantes: compter le nombre de poissons (6, 7) dans une zone de nourrissage (8) du système d'aquaculture (1), déterminer une vitesse des poissons (6, 7) et déterminer une distance moyenne entre tous les poissons (6, 7);
calculer la quantité d'alimentation à distribuer au système d'aquaculture (1) en fonction du rythme respiratoire des poissons (6, 7) dans le système d'aquaculture (1) et du comportement des poissons (6, 7) avant et pendant le nourrissage;
et distribuer une quantité calculée d'alimentation au système d'aquaculture (1).

2. Procédé selon la revendication 1, **caractérisé en ce que** la quantité d'alimentation calculée est distribuée en ajustant un débit de distribution d'alimentation variable par unité de temps, ou en ajustant une période de distribution variable ou un intervalle entre les périodes de distribution, à un débit de distribution d'alimentation constant.

3. Procédé selon la revendication 1 ou 2, **caractérisé en ce qu'**une quantité quotidienne de base d'alimentation distribuée au système d'aquaculture (1) est définie, la ration quotidienne d'alimentation étant une ration constante ou, de préférence, une ration prévue pour augmenter avec la croissance des poissons (6, 7) dans le système d'aquaculture (1), dans lequel cette quantité quotidienne de base d'alimentation est ajustée conformément au calcul de la quantité d'alimentation à distribuer au système d'aquaculture (1) en fonction du rythme respiratoire des poissons (6, 7) dans le système d'aquaculture (1) et du comportement des poissons (6, 7) avant et pendant le nourrissage.

4. Procédé selon l'une quelconque des revendications précédentes, **caractérisé en ce que** si le rythme respiratoire des poissons (6, 7) dans le système d'aquaculture (1) augmente au-dessus d'un premier seuil de rythme respiratoire, la quantité d'alimentation sera réduite, et si le rythme respiratoire des poissons (6, 7) tombe en dessous d'un second seuil de rythme respiratoire inférieur au premier seuil, le nourrissage sera suspendu, dans lequel, de préférence, les premier et second seuils sont déterminés séparément pour toutes les espèces de poissons (6, 7) dans le système d'aquaculture (1).

5. Procédé selon la revendication 4, **caractérisé en ce que** la quantité d'alimentation sera réduite si le rythme respiratoire des poissons (6, 7) dans le système d'aquaculture (1) augmente au-dessus du premier seuil de rythme respiratoire pendant une première période de temps, et le nourrissage sera suspendu si le rythme respiratoire des poissons (6, 7) dans le système d'aquaculture (1) tombe en dessous du second seuil de rythme respiratoire pendant une seconde période de temps.

6. Procédé selon l'une quelconque des revendications précédentes, **caractérisé en ce qu'**au moins l'un des paramètres suivants est mesuré: l'oxygène dissous dans le système d'aquaculture (1) ou l'ammoniac dans l'eau (3) ou la valeur du pH de l'eau (3), et les résultats de mesure sont utilisés en combinaison avec les rythmes respiratoires analysés pour calculer la quantité d'alimentation à distribuer au système d'aquaculture (1).

7. Procédé selon l'une quelconque des revendications précédentes, **caractérisé en ce que** la qualité de l'eau est estimée en utilisant la vision par ordinateur, dans lequel, de préférence, la qualité de l'eau estimée est utilisée en combinaison avec les rythmes respiratoires analysés pour calculer la quantité d'alimentation à distribuer au système d'aquaculture (1).

8. Procédé selon l'une quelconque des revendications précédentes, **caractérisé en ce qu'**une augmentation du nombre de poissons (6, 7) dans la zone de nourrissage (8) et une augmentation de la vitesse des poissons (6, 7) et une diminution de la distance moyenne entre tous les poissons (6, 7) sont considérées comme des indications pour augmenter la quantité d'alimentation à distribuer au système d'aquaculture (1), et inversement.

9. Procédé selon la revendication 8, **caractérisé en ce qu'**au moins deux des paramètres suivants sont utilisés comme indicateur combiné de la quantité d'alimentation à distribuer au système d'aquaculture (1): compter le nombre de poissons dans une zone de nourrissage du système d'aquaculture, déterminer la vitesse des poissons, et déterminer une distance moyenne entre tous les poissons, chacun de ces paramètres étant surveillé individuellement.

10. Procédé selon l'une quelconque des revendications précédentes, **caractérisé en ce qu'**il s'agit d'un procédé d'auto-apprentissage s'adaptant automatiquement à l'environnement et à la configuration du système d'aquaculture (1) sur la base des données d'images préalablement étiquetées du système d'aquaculture (1) et/ou sur la base des analyses précédentes et de la classification précédente du rythme respiratoire des poissons (6, 7) dans le système d'aquaculture (1) et du comportement des poissons (6, 7) avant et pendant le nourrissage.

11. Dispositif de nourrissage (10) pour les poissons (6, 7) dans un système d'aquaculture (1), comprenant au moins une caméra numérique (12, 13) pour capturer en continu des photos numériques ou des séquences vidéo, un système de distribution d'alimentation (20) et une unité informatique (11) conçue pour recevoir les données d'images du système d'aquaculture (1) capturées par la caméra (12, 13) et pour commander le système de distribution d'alimentation (20) afin de distribuer des rations alimentaires (22) ajustées en quantité, **caractérisé en ce que** l'unité informatique (11) est adaptée pour exécuter les étapes du procédé selon l'une quelconque des revendications précédentes.

12. Dispositif de nourrissage selon la revendication 11, **caractérisé en ce que** la caméra numérique (12, 13) est une caméra sous-marine ou une caméra placée dans un boîtier étanche translucide ou derrière une fenêtre d'observation (9) d'une paroi du système d'aquaculture.

13. Dispositif de nourrissage selon la revendication 11 ou 12, **caractérisé en ce que** le système de distribution d'alimentation (20) est un système pneumatique de distribution d'alimentation.

14. Dispositif de nourrissage selon l'une quelconque des revendications 11 à 13, **caractérisé en ce qu'**il comprend au moins un capteur (14) pour mesurer l'oxygène dissous dans le système d'aquaculture ou l'ammoniac dans l'eau ou la valeur du pH de l'eau, le capteur (14) étant configuré pour transmettre les valeurs mesurées à l'unité informatique (11).

15. Système d'aquaculture (1) comprenant un dispositif de nourrissage (10) selon l'une quelconque des revendications 11 à 14 et un bassin (2) rempli d'eau (3) pour l'élevage de poissons (6, 7), dans lequel le système d'aquaculture (1) est soit un système fermé dans lequel un échange gazeux libre avec l'environnement est empêché, soit un système ouvert permettant un échange gazeux libre avec l'environnement.

16. Produit programme d'ordinateur comprenant des instructions permettant au dispositif de nourrissage (10) selon l'une quelconque des revendications 11 à 14 d'exécuter le procédé selon l'une quelconque des revendications 1 à 10.

17. Support de données lisible par ordinateur sur lequel est enregistré le produit programme d'ordinateur selon la revendication 16.

18. Signal d'un support de données portant le produit programme d'ordinateur du produit programme d'ordinateur selon la revendication 16.
